# EUROPÄISCHE PATENTANMELDUNG

(11) **EP 0 620 421 A1**
(43) Veröffentlichungstag der Anmeldung: **19.10.1994**
(21) Anmeldenummer: 94104550.2
(22) Anmeldetag: 23.03.1994
(51) Int. Cl.: G01F 11/28

(54) **Verfahren und Vorrichtung zum volumetrischen Dosieren fliessfähiger Stoffe**

(30) Priorität: 15.04.1993 DE 4312282; 07.07.1993 DE 4322591
(71) Anmelder: MASCHINENFABRIK GUSTAV EIRICH, D-74736 Hardheim (DE)
(72) Erfinder: Diem, Winfried, D-68239 Mannheim 61 (DE)
(74) Vertreter: Weber, Dieter, Dr.

(57) **Zusammenfassung**

Die vorliegende Erfindung betrifft ein Verfahren und eine Vorrichtung zum volumetrischen Dosieren fließfähiger Stoffe, wie z.B. Flüssigkeiten oder Schüttgüter, welche in einen Dosierbehälter (1) gegeben werden, der im wesentlichen geschlossen ist und mindestens eine Zufuhröffnung (21) und mindestens eine Entlüftungsöffnung (22) aufweist oder wobei ein Dosierbehälter (1) aus einem Vorratsbehälter befüllt wird, der im wesentlichen geschlossen ist und mindestens eine Belüftungsöffnung hat. Um ein Verfahren und eine Vorrichtung der eingangs beschriebenen Art zu schaffen, welche ohne großen apparativen Aufwand eine volumetrische Dosierung mit hoher Genauigkeit ermöglichen, wird erfindungsgemäß vorgeschlagen, daß während der Zufuhr eines fließfähigen Stoffes in den Dosierbehälter (1) der Volumentstrom des durch die Entlüftungsöffnung (22) abströmenden Gases oder des durch die Belüftungsöffnung in den Vorratsbehälter zuströmenden Gases gemessen wird, wobei für die Vorrichtung eine Einrichtung (9) zum Erfassen des Gasvolumens vorgesehen ist, welches während der Zuführung des fließfähigen Stoffes über die Zufuhröffnung (21) durch die Entlüftungsöffnung (22) entweicht bzw. über die Belüftungsöffnung zuströmt.

## Beschreibung

Die vorliegende Erfindung betrifft ein Verfahren und eine Vorrichtung zum volumetrischen Dosieren fließfähiger Stoffe, wie z.B. Flüssigkeiten oder Schüttgüter, welche in einen Dosierbehälter gegeben werden, der im wesentlichen geschlossen ist und mindestens eine Zufuhröffnung und mindestens eine Entlüftungsöffnung aufweist und/oder bei welchen ein Dosierbehälter aus einem Vorratsbehälter befüllt wird, der im wesentlichen geschlossen ist und mindestens eine Belüftungsöffnung aufweist.

Unter fließfähigen Stoffen sind dabei unter anderem selbstverständlich Flüssigkeiten zuverstehen, vor allem aber auch Schüttgüter wie Granulate, Pulver und andere fein- oder grobkörnige Stoffe, wie zum Beispiel Sand oder Kies, die teilweise ähnlich wie Flüssigkeiten befördert werden können. Eventuell sind hierunter sogar schwere Gase zu fassen, die man durch vorsichtiges Eingießen unter die in dem Behälter befindliche Luft schichten kann, so daß aus dem Behälter durch die Entlüftungsöffnung lediglich Luft entweicht, wobei das Volumen der entweichenden Luft dem Volumen des eingefüllten Gases bzw. allgemein des eingefüllten Stoffes entspricht. Dabei werden dem Volumen des eingefüllten Stoffes selbstverständlich auch etwaige luft- oder gasförmige Zwischenräume zugerechnet, die sich entweder im Inneren der einzelnen Elemente (Granulate, Körner etc.) des Stoffes befinden oder sich aus der lockeren Schüttung beispielsweise zwischen den Körnern eines Granulates ergeben.

Volumendosiersysteme mit Meßbehältern zum Abmessen von Schüttgütern und Flüssigkeiten sind in Gemengemischanlagen überall dort anzutreffen, wo eine gravimetrische Dosierung ausscheidet, weil die betreffende Komponente zwingend nach Volumen zu dosieren ist.

Beispiele hierfür sind z.B. Trockenmörtel-Mischanlagen. Zuschlagkörnungen, Bindemittel und Additive werden dabei gravimetrisch, d.h. durch Wägen dosiert, während Leichtzuschläge wie Polystyrol, Perlite, Bims und andere Materialien nach ihrem jeweiligen Volumen dosiert werden müssen, da ihre Schüttgewichte bzw. Schüttdichten sehr stark schwanken können, d.h. gleiche Massen des Materials haben häufig unterschiedliche Volumina, wobei es jedoch gerade auf Letzteres, nämlich Gaseinschlüsse in Poren oder dergleichen, zum Beispiel zur Verbesserung der Wärmeisolation von Baustoffen, ankommt. Die unterschiedlichen Volumina bei gleicher Masse derartiger Zuschlagstoffe hängen oftmals mit der Art der Herstellung, gegebenenfalls auch der natürlichen Entstehung entsprechender Stoffe zusammen, die in ihren einzelnen Körnern unterschiedlich strukturiert sein können und unterschiedliche Gasvolumina enthalten können, vor allem aber auch aus unterschiedlichen Materialzusammensetzungen bestehen können. Auch in der Industrie für feuerfeste Materialien sind Gemenge-Dosier- und Mischanlagen bekannt, bei welchen einzelne Komponenten gravimetrisch und andere nach Volumen dosiert werden.

Üblicherweise werden in Gemenge-Mischanlagen zur Volumendosierung geeignete Behälter mit einer Zuführeinrichtung in Form eines Dosiergerätes und einer Entleerungseinrichtung verwendet, die in der Regel einen Verschluß aufweist. Das Volumen bzw. ein Volumensollwert wird durch eine Sonde gemessen bzw. festgelegt. Die Sonde gibt dann gegebenenfalls das Stoppsignal für die Dosiereinrichtung. Derartige Sonden können fest installiert, manuell oder auch maschinell verstellbar sein, um unterschiedliche Sollwerte einstellen zu können.

In Ausnahmefällen ist auch eine Steuerung von Hand durch Ablesen einer von außen sichtbaren Skala denkbar.

Die vorstehend beschriebenen Verfahren und Vorrichtungen zum volumetrischen Dosieren haben jedoch den Nachteil, daß sie entweder recht ungenau sind oder aber zur Erzielung einer ausreichenden Genauigkeit ein zusätzlicher apparativer Aufwand getrieben werden muß. Aus diesem Grunde werden z.B. entsprechende Dosierbehälter in relativ hoher und schlanker Form gebaut, damit die relative Ungenauigkeit bei der Erfassung des Oberflächenniveaus des eingegebenen Schüttgutes möglichst gering wird. Dies führt zu Schwierigkeiten bei der Integration derartiger Dosiersysteme in größere Anlagen oder zwingt zum Bau entsprechend kleiner Dosierbehälter, die jeweils nur relativ kleine Chargenmengen aufnehmen können, was entsprechende Herstellungsverfahren langwieriger und komplizierter macht.

Gegenüber diesem Stand der Technik liegt der vorliegenden Erfindung die Aufgabe zugrunde, ein Verfahren und eine Vorrichtung der eingangs beschriebenen Art zu schaffen, welche ohne großen apparativen Aufwand eine volumetrische Dosierung mit hoher Genauigkeit ermöglichen.

Hinsichtlich des Verfahrens wird diese Aufgabe dadurch gelöst, daß während der Zufuhr des fließfähigen Stoffes in den Dosierbehälter der Volumenstrom des durch die Entlüftungsöffnung abströmenden und/oder des durch die Belüftungsöffnung zuströmenden Gases gemessen wird.

Dabei soll im folgenden der Einfachheit halber davon ausgegangen werden, daß das abströmende bzw. zuströmende Gas Luft ist, wobei es selbstverständlich ist, daß in entsprechenden hermetisch abgeschlossenen Anlagen die Luft auch durch beliebige andere Gase ersetzt werden kann.

Hinsichtlich der Vorrichtung wird die der Erfindung zugrundeliegende Aufgabe dadurch gelöst, daß eine Einrichtung zum Erfassen des Gasvolumens vorgesehen ist, welches während des Zuführens des fließfähigen Stoffes über die Zufuhröffnung durch die Entlüftungsöffnung abfließt und/ oder durch die Belüftungsöffnung zuströmt.

Im folgenden wird lediglich die Entlüftung des Dosierbehälters betrachtet, wobei es für den Fachmann selbstverständlich ist, bezüglich der Belüftung eines Vorratsbehälters analoge Maßnahmen zu treffen bzw. Messungen vorzusehen.

Zufuhröffnung und Entlüftungsöffnung können an dem Behälter selbst noch identisch sein und sich beispielsweise erst später von einem von der Öffnung ausgehenden Rohr verzweigen, so daß die Zufuhr des fließfähigen Stoffes und die Abfuhr der durch den fließfähigen Stoff aus dem Dosierbehälter verdrängten Luft gemäß der vorliegenden Erfindung auf jeden Fall getrennt erfolgt.

Dieses Verfahren und diese Vorrichtung haben den besonderen Vorteil, daß das Ergebnis der Messung von der Form des Behälters vollständig unabhängig ist. Die Form des Dosierbehälters kann dementsprechend dem in einer gegebenen Anlage hierfür zur Verfügung stehenden Raum angepaßt werden. Dabei wird selbstverständlich auch darauf zu achten sein, daß sowohl das Einfüllen als auch das Entleeren des Behälters ohne Probleme, rasch und vollständig erfolgen kann. Im Regelfall und vorzugsweise werden deshalb trichterförmige Behälter als Dosierbehälter verwendet, die durch eine Ablauföffunung am unteren Ende oder auch durch Kippen leicht entleert werden können. Prinzipiell können jedoch die Dosierbehälter eine weitgehend beliebige Form haben, also z. B. zylinderförmig, faß- oder kesselförmig sein.

In der bevorzugten Ausführungsform der Erfindung ist vorgesehen, daß die Einrichtung zum Messen des Volumenstroms eine Gasuhr ist, so daß also das Volumen des zugeführten Stoffes aus dem mittels einer Gasuhr gemessenen Volumen der ausströmenden Luft bestimmt wird. Derartige Gasuhren arbeiten mit relativ hoher Genauigkeit, so daß auch das Volumen des in den Dosierbehälter eingefüllten Stoffes entsprechend genau bestimmt werden kann. Ein besonderer Vorteil des erfindungsgemäßen Verfahrens und der entsprechenden Vorrichtung liegt auch darin, daß diese Volumenmessung vollständig unabhängig davon ist, ob sich beispielsweise in dem Dosierbehälter ein Schüttkegel ausbildet, der ansonsten bei Verwendung einer Meßsonde eine beträchtliche Verfälschung des Meßergebnisses verursachen könnte.

In einer anderen Variante der Erfindung ist eine Bestimmung des Volumens der abströmenden Luft mit Hilfe eines Strömungsgeschwindigkeitsmessers vorgesehen, weicher in einem an die Entlüftungsöffnung anschließenden Rohr mit bekanntem Querschnitt angeordnet ist. Insbesondere für die letztgenannte, besonders einfache Ausführungsform einer Vorrichtung gemäß der vorliegenden Erfindung kann jedoch die Durchführung einer Eichmessung mit Hilfe einer unabhängigen Bestimmung des in einen Behälter eingefüllten Volumens zweckmäßig sein.

Es versteht sich, daß zur Erzielung einer hinreichenden Genauigkeit der Füllvorgang so erfolgen sollte, daß ein Entweichen von Gas durch die Einfüllöffnung praktisch ausgeschlossen ist. Dies kann man unter anderem dadurch erreichen, daß die Zuführung des fließfähigen Stoffes über ein Rohr erfolgt, dessen Querschnitt während der Zuführung des fließfähigen Stoffes vollständig von diesem ausgefüllt wird. Es reicht aber gegebenenfalls auch aus, wenn die Zufuhr beispielsweise vom Grund eines Vorratsbehälters oder Silos aus erfolgt, vorausgesetzt, daß auf dem Weg von dem Silo zu dem Dosierbehälter nennenswerte Lecks ausgeschlossen werden können. Geeignete Zufuhreinrichtungen sind beispielsweise eine Zellradschleuse, ein Schneckenförderer oder ein einfacher Siloablauf mit einem Sperrschieber.

Neben der Bestimmung des Volumens des eingefüllten, fließfähigen Stoffes kann jedoch auch eine Erfassung seines Gewichtes zweckmäßig sein, beispielsweise in Fällen, wo bei starken Volumenschwankungen des grundsätzlich selben Materials auch das Gewicht als ein weiterer Parameter zur Festlegung der zu dosierenden Menge herangezogen wird, etwa in dem Sinne, daß bei einem relativ hohen Gewicht bzw. einer hohen Dichte des Stoffes ein etwas geringerer Dosierwert für das Volumen ausgewählt wird als bei einer sehr niedrigen Dichte dieses Stoffes. Wie bereits erwähnt, schließt dabei der Begriff "Dichte" auch das in einer losen Schüttung körnigen Materials notwendigerweise eingeschlossene Luftvolumen ein.

Darüberhinaus kann das Dosierverfahren auch kumulativ und unabhängig voneinander sowohl volumetrische als auch Gewichtsbestimmungen vorsehen, wenn beispielsweise aufeinanderfolgend verschiedene Stoffe zu dosieren sind, von denen ein Teil gravimetrisch und ein anderer Teil volumetrisch zu bestimmen ist.

Für bestimmte Anwendungsfälle besonders geeignet sind eine Variante der Vorrichtung und ein entsprechendes Verfahren, bei welchen Temperatursensoren zur Erfassung der Temperatur in dem Dosierbehälter und zur Erfassung der Temperatur der abströmenden Luft vorgesehen sind. Beispielsweise kann der einzufüllende Stoff eine andere Temperatur haben als die vorher in dem Dosierbehälter vorhandene Luft. Während des Einfüllens des Stoffes wird dann die im Behälter befindliche Luft je nach dem Vorzeichen der Temperaturdifferenz erwärmt oder abgekühlt, so daß sich auch ihr Volumen allein aufgrund dieser Temperaturänderung verändert Dementsprechend ändert sich auch das von einer Gasuhr oder einer sonstigen Volumenstrommeßeinrichtung erfaßte Volumen des ausströmenden Gases, so daß eine entsprechende Korrektur des Dosiervolumens auf der Basis der Temperatur der Luft vor dem Zuführen des Stoffes in dem Behälter und der Temperatur der abströmenden Luft erfolgen kann.

Die Zufuhröffnung für den fließfähigen Stoff und die Entlüftungsöffnung sollten beabstandet voneinander am Deckel des Behälters angeordnet sein. Der Behälter selbst ist zweckmäßigerweise trichterförmig und hat an seinem Boden eine Entleeröffnung mit einem Verschluß.

Besonders bevorzugt ist eine Ausführungsform der Erfindung, bei welcher der Behälter zusätzlich auf einer Wägeeinrichtung gelagert ist, wobei diese Wägeeinrichtung vorzugsweise aus sogenannten Wägezellen besteht, die Dehnungsmeßstreifen aufweisen. Diese liefern bereits bei sehr geringen elastischen Verformungen der Wägemeßzellen ein relativ großes Spannungssignal, so daß sich Gewichtsänderungen sehr genau bei nur äußerst geringen vertikalen Bewegungen der Behälter erfassen lassen. Meßverstärker geben die von den Meßzellen erfaßten und verstärkten Meßwerte an eine Steuer- und Kontrolleinrichtung weiter.

Mit einer solchen Einrichtung ist es möglich, die in den Dosierbehälter zugegebenen Stoffe unabhängig sowohl volumetrisch als auch hinsichtlich ihres Gewichtes zu bestimmen.

Der Deckel eines solchen, auf Wägezellen gelagerten bzw. aufgehängten Dosierbehälters sollte vorzugsweise über eine flexible Manschette bzw. einen Balg mit dem oberen Rand des Behälters verbunden sein, um in vertikaler Richtung keine Kräfte auf den Behälter und damit auf die Wägezellen auszuüben. Der Deckel kann zu diesem Zweck beispielsweise an Zuführrohren oder Abführrohren aufgehängt sein, die an die Zuführ- bzw. Entlüftungsöffnung anschließen.

Weiterhin kann es bei einer solchen Ausführungsform der Erfindung zweckmäßig sein, wenn zusätzlich eine zweite Entlüftungsöffnung vorgesehen ist, die keine Meßeinrichtung für den Volumenstrom der abströmenden Luft aufweist, da dessen Erfassung zur Bestimmung des Gewichtes des eingefüllten Stoffes nicht erforderlich ist. Die beiden Entlüftungsöffnungen können jeweils Klappen aufweisen, durch welche sie wechselseitig verschließber und öffenbar sind.

Zweckmäßig ist weiterhin ein Füllstandsmelder, der in der Lage ist, den Leerzustand des Dosierbehälters anzuzeigen, damit einerseits das Ende des Entleervorganges zuverlässig festgestellt werden kann, andererseits aber auch festgestellt wird, falls nach dem Entleeren irgendwelche Restmengen in dem Dosierbehälter verblieben sind.

Weiterhin kann stromabwärts hinter einer oder mehreren Entlüftungsöffnungen auch eine Entstaubungsvorrichtung vorgesehen sein. Eine solche Entstaubungsvorrichtung oder aber zumindest ein Staubfilter kann gegebenenfalls auch vor oder hinter einer Gasmeßeinrichtung bzw. vor einer Gasuhr angeordnet werden.

Schließlich ist auch eine Steuer- und Kontrolleinrichtung vorgesehen, weiche entsprechend einer vorgebbaren Rezeptur Gewicht und Volumen miteinander zu vermengender Stoffe erfaßt und die Eingabe entsprechender Dosiermengen in den Dosierbehälter steuert. Von dem Dosierbehälter aus werden dann die Stoffe einem oder mehreren verschiedenen Mischbehältern zugeführt und entsprechend der Rezeptur miteinander vermischt.

Dabei haben sich das erfindungsgemäße Verfahren und die entsprechende Vorrichtung als besonders geeignet zur Volumendosierung erwiesen, weil sich mit diesen Verfahren und der entsprechenden Vorrichtung auf relativ einfache, schnelle und gleichzeitig genaue Weise das Gesamtvolumen eines in den Dosierbehälter eingeflossenen fließfähigen Stoffes ermitteln läßt.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
- Figur 1: schematisch einen Dosierbehälter mit Zufuhr- und Entlüftungseinrichtungen,
- Figur 2: eine Anlage ähnlich der Figur 1, wobei jedoch der Dosierbehälter an Wägezellen aufgehängt ist und wobei gegenüber der Ausführungsform der Figur 1 auch weitere, zusätzliche Elemente vorgesehen sind, und
- Figur 3: nochmals eine Anlage ähnlich Figur 2, wobei zusätzlich auch eine Steuer- und Kontrolleinrichtung dargestellt ist.

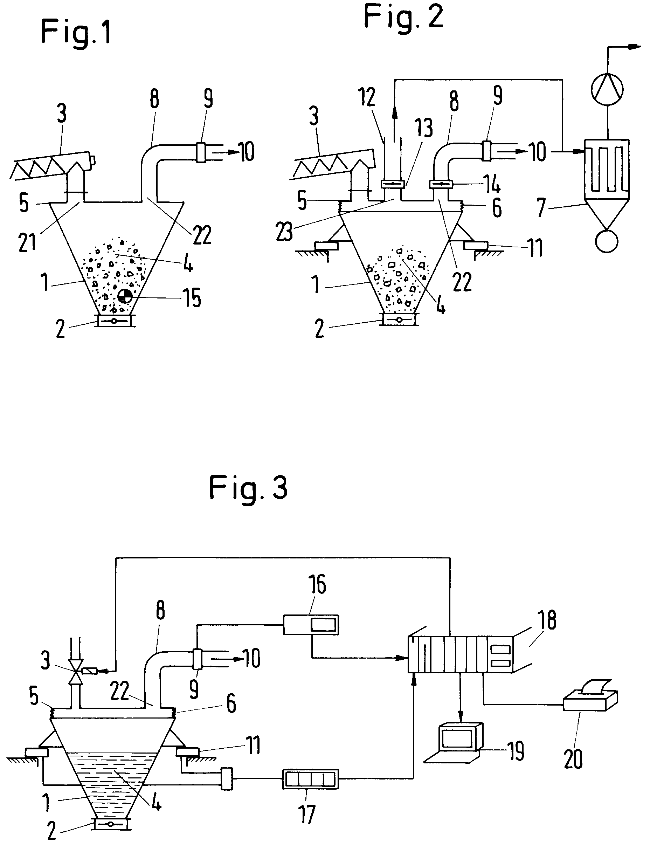

Man erkennt in Figur 1 einen Dosierbehälter 1 in Form eines Trichters mit genügend steilen Wänden, so daß eingefülltes Schüttgut 4 aufgrund der Schwerkraft ohne weiteres nach unten zu einer Entleeröffnung rutscht, die durch einen Austragverschluß 2 verschließbar ist. Ein Füllstandssensor 15 ist relativ weit am unteren Ende des trichterförmigen Dosierbehälters 1 oder am Verschluß 2 vorgesehen, um den Leerzustand des Behälters 1 zu erfassen. Der Behälter 1 ist auf seiner Oberseite durch einen Deckel 5 dicht verschlossen, wobei im Deckel 5 eine Einfüllöffnung 21 und eine Entlüftungsöffnung 22 vorgesehen sind. Der Deckel 5 kann mit dem Rand des Behälters 1 verschweißt oder verschraubt sein, er kann aber auch lose auf dem Rand des Behälters 1 aufliegen, wobei zusätzlich auch eine Dichtung zwischen Deckel 5 und Behälter 1 vorgesehen sein kann. An die Einfüllöffnung 21 schließt ein kurzer, nicht näher bezeichneter Rohrstutzen an, welcher mit dem Endabschnitt des Rohres 3 eines Schneckenförderers verbunden ist. Ein Rohr 8 bzw. ein Rohrkrümmer erstreckt sich von der Entlüftungsöffnung 22 nach außen und ist mit einer Gasuhr 9 oder einer sonstigen Einrichtung zur Erfassung des Volumenstromes 10 der ausströmenden Luft versehen. Behälter 1, Deckel 5 und Rohre 3, 8 sind im wesentlichen gasdicht miteinander verbunden, wobei allerdings eine wirklich druckdichte Verbindung im allgemeinen nicht erforderlich ist und auch kleinere Lecks durchaus toleriert werden können, solange die durch derartige Lecks zusätzlich ab- oder zuströmende Luftmenge vernachlässigbar klein im Verhältnis zu dem von der Gasuhr 9 während eines Füllvorganges erfaßten Gasvolumens 10 ist. Das andere, nicht sichtbare Ende des Schneckenförderers 3 kann beispielsweise mit der Ablauföffnung am unteren Ende eines Vorratssilos für den einzufüllenden Stoff 4 verbunden sein.

In Figur 2 erkennt man eine weitere Variante des in Figur 1 dargestellten Ausführungsbeispieles, wobei diese Variante im Unterschied zu dem Ausführungsbeispiel der Figur 1 zusätzliche Wägezellen 11 aufweist, auf welchen der Dosierbehälter 1 gelagert ist. Der Deckel 5 ist deshalb über einen in Axialrichtung leicht verformbaren Balg 6 mit dem Rand des Behälters 1 dicht verbunden, so daß von dem Deckel 5 und den damit verbundenen Rohrstutzen und anschließenden Teilen keine nennenswerten Rückwirkungskräfte auf den Behälter 1 einwirken können, die ansonsten das Ergebnis der Wägung mit Hilfe der Wägezellen 11 verfälschen könnten. Vorzugsweise enthalten die Wägezellen 11 Dehnungsmeßstreifen als gewichtssensitive Elemente, so daß der Behälter 1 unabhängig von dem Gewicht des darin enthaltenen Stoffes 4 seine vertikale Position im wesentlichen beibehält, so daß sich das Volumen zwischen dem Behälter 1 und dem an den Rohren 3, 8, 12 fest aufgehängten Deckel 5 aufgrund der geringen Relativbewegung praktisch nicht oder nur vernachlässigbar wenig ändert.

Wie man erkennt, kann bei der in Figur 2 dargestellten Vorrichtung sowohl das über das Rohr 8 ausströmende Gasvolumen 10 mit Hilfe der Gasuhr 9 erfaßt werden und es kann auch über die Wägezellen 11 das Gewicht des in dem Dosierbehälter 1 enthaltenen Materials 4 gemessen werden, genauer gesagt die Differenz des Gewichtes des leeren Behälters 1 zu dem mehr oder weniger gefüllten Behälter 1. Für den Fall, daß nur das Gewicht des eingefüllten Stoffes 4 zu erfassen ist, kann die Leitung 8 durch eine Klappe 14 verschlossen werden, während eine zweite Entlüftungsöffnung 23 durch Öffnung einer Klappe 13 zu dem weiteren Entlüftungsrohr 12 hin geöffnet werden kann, wobei das Entlüftungsrohr 12 hinter der Gasuhr 9 und dem damit zu erfassenden Volumenstrom 10 in das Rohr 8 mündet. Die Zusammenführung der Rohre 12 und 8 ist vor allem für den Zweck vorgesehen, daß das ausströmende Gasvolumen beispielsweise Staub und andere störende Bestandteile enthält, die in einer Entstaubungseinrichtung oder einem Filter 7 entfernt werden sollten, bevor die Abluft in die Umgebung entlassen wird.

Selbstverständlich ist es auch möglich, während der Erfassung des Gewichtes des eingefüllten Stoffes 4 mit Hilfe der Wägezellen 11 gleichzeitig auch das ausströmende Gasvolumen 10 mit Hilfe der Gasuhr 9 zu erfassen, indem die Klappe 13 geschlossen gehalten wird, während die Klappe 14 geöffnet ist. In Einzelfällen kann nämlich auch neben der rein volumetrischen Bestimmung des zu dosierenden Stoffes 4 das Gewicht als Korrekturgröße für die zu dosierende Menge berücksichtigt werden, falls beispielsweise die Dichte des Stoffes 4 außerhalb eines festzulegenden Toleranzbereiches liegt. Dies bedeutet allerdings nicht, daß die Volumendosierung durch eine Gewichtsdosierung ersetzt wird, sondern lediglich, daß die Volumensollwerte in der einen oder anderen Richtung in Abhängigkeit von dem Gewicht bzw. der aktuellen Dichte verschoben werden, ohne daß deshalb der Massenunterschied zwischen ansonsten gleichartigen Stoffen mit unterschiedlichen Dichten vollständig ausgeglichen wird.

In Figur 3 erkennt man als Zufuhreinrichtung ein Ventil 3', welches eine Flüssigkeitsleitung öffnen und verschließen kann, da in diesem Fall der volumetrisch zu dosierende Stoff eine Flüssigkeit 4 ist. Auch in diesem Fall ist wieder ein Entlüftungsrohr 8 mit einer Gasuhr 9 vorgesehen, um den Volumenstrom 10 des von der Flüssigkeit 4 verdrängten Gases bzw. der verdrängten Luft zu erfassen. Die Wägezellen 11 sind über einen Meßverstärker 17 mit einer Steuer- und Kontrollvorrichtung 18 verbunden. Weiterhin werden auch die Signale des Volumenmeßgerätes bzw. der Gasuhr 9 über ein Auswertegerät 16 an die Steuer- und Kontrollvorrichtung 18 weitergegeben. Diese ist von einem Steuerpult 19 mit Bildschirm aus bedienbar, so daß die Steuer- und Kontrolleinrichtung 18 beliebig programmiert werden kann und so, daß insbesondere die Sollwerte für das Volumen und/oder das Gewicht der einzudosierenden Stoffmengen 4 eingestellt werden können. Ein Drucker 20 erstellt wahlweise sowohl ein Protokoll der eingestellten Dosierparameter als auch eines tatsächlich erfolgten Dosiervorganges. Über die Steuer- und Kontrolleinrichtung 18 wird vor allem auch das Öffnen und Schließen des Ventils 3' bewirkt. Die Auswerteeinrichtung 16 kann im übrigen noch mit nicht dargestellten Temperatursensoren im inneren des Behälters 1 und unmittelbar vor der Gasuhr 9 verknüpft sein, um den gemessenen Volumenstrom 10 gegebenenfalls aufgrund von Temperaturunterschieden der ursprünglich in dem Behälter 1 enthaltenen Luft zu der tatsächlich abströmenden Luft korrigieren zu können.

Nachdem in den Dosierbehälter 1 eine bestimmte Komponente entsprechend einem in der Steuer- und Kontrolleinrichtung 18 gespeicherten Sollwert eingefüllt worden ist, wird der Behälterverschluß 2 am Boden des Dosierbehälters 1 geöffnet und der Stoff in einen Mischbehälter weitergeleitet. Ein in Figur 3 nicht dargestellter Füllstandssensor 15 kann gegebenenfalls den Leerzustand des Behälters 1 erfassen und an die Steuer- und Kontrolleinrichtung 18 melden. Anschließend wird der Verschluß 2 wieder geschlossen und es kann wahlweise die volumetrische oder gravimetrische Dosierung eines weiteren Stoffes 4 erfolgen, der mit dem bereits abgemessenen Stoff noch zu vermengen ist. Es versteht sich, daß am Deckel 5 mehrere verschiedene Zufuhröffnungen vorgesehen sein können, die jeweils über entsprechende Überführungseinrichtungen wie den bereits beschriebenen Schneckenförderer 3 oder über Rohrleitungen mit Ventilen wie dem Ventil 3' in Figur 3 mit entsprechenden Vorratsbehältern verbunden sein können.

## Patentansprüche

1. Verfahren zum volumetrischen Dosieren fließfähiger Stoffe, wie z.B. Flüssigkeiten oder Schüttgütern, wobei die fließfähigen Stoffe in einen Dosierbehälter (1) gegeben werden, der im wesentlichen geschlossen ist und mindestens eine Zufuhröffnung (21) und eine Entlüftungsöffnung (22) hat, oder wobei ein Dosierbehälter (1) aus einem Vorratsbehälter befüllt wird, der im wesentlichen geschlossen ist und mindestens eine Belüftungsöffnung hat, dadurch gekennzeichnet, daß während der Zufuhr eines fließfähigen Stoffes in den Dosierbehälter (1) der Volumenstrom des durch die Entlüftungsöffnung (22) abströmenden und/oder des durch die Belüftungsöffnung in den Vorratsbehälter zuströmenden Gases gemessen wird.

2. Verfahren nach Anspruch 1, dadurch gekennzeichnet, daß zur Erfassung des Volumens des abströmenden Gases eine Gasuhr (9) verwendet wird.

3. Verfahren nach Anspruch 1 oder 2, dadurch gekennzeichnet, daß zur Bestimmung des abströmenden oder zuströmenden Gasvolumens die Strömungsgeschwindigkeit in einem an die Entlüftungsöffnung (22) anschließenden Entlüftungsrohr (8) bzw. an die Zufuhröffnung anschließenden Belüftungsrohr mit bekanntem Querschnitt erfaßt wird.

4. Verfahren nach einem der Ansprüche 1 bis 3, dadurch gekennzeichnet, daß eine Eichmessung mit einer unabhängigen Bestimmung des in dem Dosierbehälter enthaltenen Volumens des fließfähigen Stoffes erfolgt.

5. Verfahren nach einem der Ansprüche 1 bis 4, dadurch gekennzeichnet, daß der Füllvorgang so erfolgt, daß ein Entweichen von Gas durch die Zufuhröffnung (21) oder eine Zufuhr von Gas außerhalb der Belüftungsöffnung vermieden wird.

6. Verfahren nach Anspruch 5, dadurch gekennzeichnet, daß der Füllvorgang unter Inanspruchnahme des Gesamtquerschnittes der Füllöffnung oder eines vorder Füllöffnung (21) liegenden Füllrohres (3) erfolgt.

7. Verfahren nach Anspruch 5 oder 6, dadurch gekennzeichnet, daß der Füllvorgang über eine Zellradschleuse erfolgt.

8. Verfahren nach Anspruch 5 oder 6, dadurch gekennzeichnet, daß der Füllvorgang mit Hilfe eines Schneckenförderers erfolgt.

9. Verfahren nach einem der Ansprüche 5 oder 6, dadurch gekennzeichnet, daß der Füllvorgang über einen Siloablauf erfolgt.

10. Verfahren nach einem der Ansprüche 1 bis 9, dadurch gekennzeichnet, daß unabhängig von der volumetrischen Bestimmung der Füllung eine Gewichtserfassung des fließfähigen Stoffes vorgesehen ist.

11. Verfahren nach Anspruch 10, dadurch gekennzeichnet, daß insbesondere bei der Zufuhr verschiedenartiger fließfähiger Stoffe eine kumulative Volumen- und Gewichtsbestimmung erfolgt.

12. Vorrichtung zum volumetrischen Dosieren fließfähiger Stoffe, wie z.B. Flüssigkeiten oder Schüttgütern, mit einem im wesentlichen geschlossenen Dosierbehälter (1), mindestens einer Zufuhröffnung (21) und einer Entlüftungsöffnung (22) an dem Dosierbehälter, oder mit einem Dosierbehälter (1) und einem dem Dosierbehälter (1) vorgeschalteten, im wesentlichen geschlossenen Vorratsbehälter, der mindestens eine Belüftungsöffnung aufweist, dadurch gekennzeichnet, daß eine Einrichtung (9) zum Erfassen des Gasvolumens vorgesehen ist, welches während der Zuführung des fließfähigen Stoffes über die Zufuhröffnung (21) durch die Entlüftungsöffnung (22) entweicht und/oder welches durch die Belüftungsöffnung in den Vorratsbehälter zuströmt.

13. Vorrichtung nach Anspruch 12, dadurch gekennzeichnet, daß die Einrichtung (9) eine Gasuhr ist.

14. Vorrichtung nach Anspruch 12 oder 13, dadurch gekennzeichnet, daß die Einrichtung (9) eine in einem Rohr (8) vorgesehene Einrichtung zum Messen der Strömungsgeschwindigkeit des Gases in dem Rohr ist.

15. Vorrichtung nach einem der Ansprüche 12 bis 14, dadurch gekennzeichnet, daß Temperatursensoren zum Erfassen der Temperatur des fließfähigen Stoffes (4) und des durch die Entlüftungsöffnung ausströmenden bzw. durch die Belüftungsöffnung zuströmenden Gases vorgesehen sind.

16. Vorrichtung nach einem der Ansprüche 12 bis 15, dadurch gekennzeichnet, daß die Zufuhröffnung (21) und die Entlüftungsöffnung (22) beabstandet voneinander am Deckel (5) des Behälters (1) angeordnet sind.

17. Vorrichtung nach einem der Ansprüche 12 bis 16, dadurch gekennzeichnet, daß der Dosierbehälter (1) trichterförmig ausgebildet ist.

18. Vorrichtung nach einem der Ansprüche 12 bis 17, dadurch gekennzeichnet, daß der Dosierbehälter (11) eine Entleeröffnung mit einem Verschluß (2) am Boden des Behälters (1) aufweist.

19. Vorrichtung nach einem der Ansprüche 12 bis 18, dadurch gekennzeichnet, daß der Dosierbehälter (1) auf einer Wägeeinrichtung (11) gelagert ist.

20. Vorrichtung nach Anspruch 19, dadurch gekennzeichnet, daß die Wägeeinrichtung (11) aus Wägezellen mit Dehnungsmeßstreifen besteht.

21. Vorrichtung nach einem der Ansprüche 12 bis 20, dadurch gekennzeichnet, daß der die Öffnungen (21, 22) aufweisende Deckel (5) des Behälters (1) über ein flexibles Balgelement mit dem Rand des Dosierbehälters (1) verbunden und unabhängig von dem Behälter (1) aufgehängt ist.

22. Vorrichtung nach einem der Ansprüche 12 bis 21, dadurch gekennzeichnet, daß ein separater Füllstandsmelder (15) vorgesehen ist, welcher einen Leerzustand des Dosierbehälters (1) anzeigen kann.

23. Vorrichtung nach einem der Ansprüche 12 bis 22, dadurch gekennzeichnet, daß eine zweite Entlüftungsöffnung (23) ohne Meßeinrichtung vorgesehen ist.

24. Vorrichtung nach einem der Ansprüche 12 bis 23, dadurch gekennzeichnet, daß der oder den Entlüftungsöffnungen (22, 23) eine Entstaubungsvorrichtung (7) nachgeschaltet ist.

25. Vorrichtung nach einem der Ansprüche 12 bis 24, dadurch gekennzeichnet, daß eine Steuer- und Kontrolleinrichtung (18) für die Steuerung der Zufuhr des fließfähigen Stoffes (4) in Abhängigkeit von dem aus der Meßeinrichtung (9) abgeleiteten Ergebnis vorgesehen ist.
